# FASCICULE DE BREVET EUROPEEN

(11) **EP 1 574 694 B1**
(45) Date de publication et mention de la délivrance du brevet: **13.10.2010**
(21) Numéro de dépôt: 04075582.9
(22) Date de dépôt: 24.02.2004
(51) Int. Cl.: F02D 41/14, F02D 41/40

(54) **Dispositif et procédé de régulation du débit de carburant injecté dans un moteur diesel**
Vorrichtung und Verfahren zur Kraftstoffeinspritzmengenregelung in einem Dieselmotor
Apparatus and method controlling metering of injected fuel in a diesel engine

(43) Date de publication de la demande: 14.09.2005
(73) Titulaire: RENAULT S.A.S., 92100 Boulogne Billancourt (FR)
(72) Inventeur: Cruchet, Jérôme, 91650 Breuillet (FR); Lombardin, Jacques Olivier, 91600 Savigny sur Orge (FR); Fontvieille, Laurent, 91700 Ste Genevieve des Bois (FR)
(74) Mandataire: Rougemont, Bernard

(56) Documents cités:
- DE-A- 3 303 617
- DE-C- 3 914 264
- US-A- 4 400 944
- US-A- 5 050 376
- US-A- 5 819 705
- US-A- 6 000 384
- US-A1- 2002 011 237
- PATENT ABSTRACTS OF JAPAN vol. 009, no. 235 (M-415), 21 septembre 1985 (1985-09-21) & JP 60 090940 A (NISSAN JIDOSHA KK), 22 mai 1985 (1985-05-22)

## Description

La présente invention a pour objet un dispositif et un procédé de régulation du débit de carburant injecté dans un moteur diesel pour véhicule automobile, moteur fonctionnant à une pression supérieure à la pression atmosphérique par suralimentation de l'air frais au moyen d'un turbocompresseur.

Dans un tel moteur, la quantité de carburant injecté est limitée dans la zone de pleine charge. Le turbocompresseur équipant ce type de moteur comprend une turbine et un compresseur augmentant la quantité d'air admise dans les cylindres du moteur. La turbine est placée à la sortie du collecteur d'échappement du moteur et est entraînée par les gaz d'échappement. La puissance fournie par les gaz d'échappement à la turbine peut être modulée en installant une soupape de décharge ou en prévoyant des ailettes de géométrie variable sur la turbine (turbine à géométrie variable ou TGV). Le compresseur est monté sur le même axe mécanique que la turbine. Il comprime l'air qui entre dans le collecteur d'admission du moteur. Un échangeur de chaleur peut être avantageusement placé entre le compresseur et le collecteur d'admission afin de refroidir l'air à la sortie du compresseur.

Un dispositif d'actionnement peut être prévu afin de piloter l'ouverture et la fermeture de la soupape de décharge précitée ou la position des ailettes modifiant la géométrie de la turbine. Le signal de pilotage de cet actionneur est émis par une unité de commande électronique (UCE) de façon à réguler la pression de l'air dans le collecteur d'admission du moteur. La valeur de consigne de la pression dans le collecteur d'admission est calculée par l'unité de commande électronique, en fonction d'un signal de pression à l'entrée du collecteur qui peut être mesuré au moyen d'un capteur de pression placé de façon appropriée.

D'une manière générale, la commande du moteur est gérée par un ensemble de capteurs et d'actionneurs en fonction d'un ensemble de lois de commande, dites « stratégies logicielles », et de paramètres de caractérisation ou calibrations du moteur. L'ensemble de ces lois est mémorisé dans l'unité de contrôle électronique qui est alors capable d'émettre les signaux de pilotage nécessaires à la gestion du fonctionnement du moteur.

Lorsque le conducteur du véhicule souhaite une certaine puissance du moteur, il appuie sur la pédale d'accélérateur, ce qui entraîne l'émission d'un signal de position transmis à l'unité de commande électronique, laquelle peut en déduire une consigne de débit du carburant à injecter dans le moteur pour l'obtention de la puissance demandée par le conducteur. Cette valeur de consigne du débit de carburant demandé par le conducteur est limitée en phase transitoire par un seuil qui est fonction du débit d'air frais et du régime de rotation du moteur. Le débit d'air frais peut être mesuré au moyen d'un débitmètre ou de tout autre organe analogue, ou encore calculé par un dispositif d'estimation. La limitation du débit de carburant injecté pendant cette phase transitoire permet de limiter les particules présentes dans les gaz d'échappement du moteur pendant cette phase, particules qui se traduisent par l'apparition de fumées noires en sortie d'échappement.

Lorsque le débit d'air entrant dans le moteur est suffisant, la valeur de consigne du débit de carburant injecté est en outre limitée par une valeur qui est fonction du régime de rotation du moteur, du débit d'air et éventuellement du rapport de transmission du couple du moteur vers la boîte de vitesses du véhicule.

Toutes ces limitations sont déterminées à partir d'essais réalisés sur les moteurs en sortie de fabrication. Pour chaque régime moteur, des courbes sont établies, et on identifie un débit de carburant injecté maximum pour respecter les contraintes thermomécaniques du moteur. Ces mesures sont faites sur la base d'un moteur de caractéristiques dites « nominales », c'est-à-dire sur un moteur théorique. En présence d'un moteur réel légèrement différent, si l'on applique le même réglage de débit de carburant injecté maximum que pour le moteur théorique nominal, les contraintes thermomécaniques du moteur risquent de ne pas être respectées. Par ailleurs, pour un autre type de moteur, pour lequel les contraintes thermomécaniques resteraient inférieures aux limites acceptables, le réglage du débit de carburant maximum basé sur le moteur théorique nominal, tout en étant pas gênant pour le moteur, entraîne pour le conducteur un déficit de puissance par rapport à un moteur nominal.

En d'autres termes, la dispersion des caractéristiques des différents moteurs en sortie d'usine, oblige les metteurs au point à intégrer ces dispersions pour le réglage qui est effectué sur les moteurs en sortie de fabrication, et en particulier pour le réglage des valeurs limites de débit de carburant injecté maximum, en prenant une marge de sécurité sur les contraintes thermomécaniques.

Dans les mêmes conditions, l'existence d'un filtre à particules généralement disposé dans la ligne d'échappement d'un moteur diesel, provoque une augmentation de la pression à l'entrée de la turbine, en fonction de la quantité de suie encrassant progressivement le filtre à particules. Lors du réglage des moteurs en sortie de fabrication, le metteur au point est ainsi amené à limiter le couple maximal pour un niveau de pression maximal à l'entrée de la turbine, tenant compte du futur encrassement du filtre à particules. Il en résulte que le moteur ne peut pas délivrer toute sa puissance lorsque le filtre à particules est propre et tant qu'il n'a pas atteint son niveau maximal d'encrassement.

Les documents DE 39 14 264 et US 6 000 384 divulguent des procédés dans lequels on régule la quantité de carburant injecté dans le moteur en fonction d'une température mesurée à l'échappement.

La présente invention a pour objet un dispositif et un procédé qui permettent d'éviter de prendre en considération la dispersion des moteurs en sortie de fabrication ou l'encrassement progressif du filtre à particules pour le réglage des moteurs en sortie d'usine.

L'invention a ainsi pour objet de permettre un réglage des moteurs, quelles que soient leurs caractéristiques, sans tenir compte d'une marge de sécurité comme c'était le cas auparavant, permettant ainsi d'obtenir pour chaque moteur les meilleurs réglages possibles assurant la puissance maximale du moteur au cours de son fonctionnement.

Le dispositif selon l'invention permet la régulation du débit de carburant injecté dans un moteur diesel pour véhicule automobile, suralimenté par un turbocompresseur. Le dispositif comprend un capteur de la température des gaz d'échappement à l'entrée de la turbine du turbocompresseur et un système d'asservissement de ladite température, comprenant un régulateur qui reçoit une valeur de consigne de température fonction d'une commande du conducteur du véhicule automobile et la valeur de température mesurée par le capteur, afin de fournir au moteur, une valeur corrigée du débit de carburant injecté.

Il est ainsi possible de corriger automatiquement les dispersions que l'on constate entre différents moteurs d'un même type en sortie d'usine et, lors du réglage des moteurs, de supprimer la marge de sécurité habituellement appliquée pour tenir compte précisément de cette dispersion. La calibration de la courbe de pleine charge peut être faite sur la base d'un moteur de caractéristiques nominales. La régulation de l'invention se charge, en fonctionnement, de diminuer ou d'augmenter la courbe de pleine charge, selon les caractéristiques réelles de chaque moteur, afin de ramener la température maximale à l'entrée de la turbine à la valeur limite maximale déterminée pour le moteur nominal.

De préférence, le dispositif de régulation comprend une cartographie mémorisée du régime de rotation du moteur en fonction du débit de carburant injecté, pour la détermination de la valeur de consigne de température.

La valeur de consigne de température est avantageusement le résultat d'une cartographie mémorisée du régime de rotation du moteur en fonction de la position de la pédale d'accélérateur du véhicule.

Le dispositif de régulation comprend en outre de préférence, un dispositif de limitation de couple moteur à partir d'une cartographie mémorisée du régime de rotation du moteur en fonction du rapport de transmission du couple moteur, ce dispositif de limitation de couple moteur ajoutant une correction supplémentaire à la valeur corrigée de débit de carburant injecté.

Le dispositif de régulation comprend en outre avantageusement un dispositif de limitation des fumées à l'échappement à partir d'une cartographie mémorisée du régime de rotation du moteur en fonction du débit d'air frais alimentant le turbocompresseur, ce dispositif de limitation des fumées ajoutant une correction supplémentaire à la valeur corrigée de débit de carburant injecté.

Il est inutile de faire fonctionner cette régulation en permanence. Le dispositif de régulation comprend donc de préférence un moyen d'inactivation du système d'asservissement pour les zones de fonctionnement du moteur dans lesquelles la température des gaz d'échappement à l'entrée de la turbine du turbocompresseur reste inférieure à une limite prédéterminée.

L'invention est également particulièrement adaptée au cas où le véhicule automobile comprend un filtre à particules sur le trajet des gaz d'échappement. Dans ce cas en effet, le dispositif de l'invention permet de ne pas tenir compte de l'évolution future de la charge en suies du filtre à particules. La calibration de la courbe de pleine charge peut être faite sur la base d'un filtre propre. Le réglage du moteur en sortie d'usine peut être fait indépendamment de l'état futur du filtre à particules.

Selon l'invention, le procédé de régulation du débit de carburant injecté dans un moteur diesel pour véhicule automobile, suralimenté par un turbocompresseur, consiste à mesurer la température des gaz d'échappement à l'entrée de la turbine du turbocompresseur et à asservir la température des gaz d'échappement à l'entrée de la turbine du turbocompresseur en corrigeant le débit du carburant injecté dans le moteur en fonction de la température mesurée et d'une valeur de consigne de température qui est fonction d'une commande du conducteur du véhicule automobile.

Pour les raisons exprimées précédemment, le procédé de l'invention est particulièrement adapté à un véhicule automobile qui comprend un filtre à particules sur le trajet des gaz d'échappement.

L'invention sera mieux comprise à l'étude d'un mode de réalisation particulier décrit à titre d'exemple non limitatif et illustré par les dessins annexés, sur lesquels :
- la figure 1 illustre schématiquement les principaux éléments d'un moteur diesel turbocompressé équipé d'un dispositif de régulation du débit de carburant injecté selon l'invention ; et
- la figure 2 montre un exemple de réalisation du régulateur utilisé dans le dispositif de régulation de l'invention.

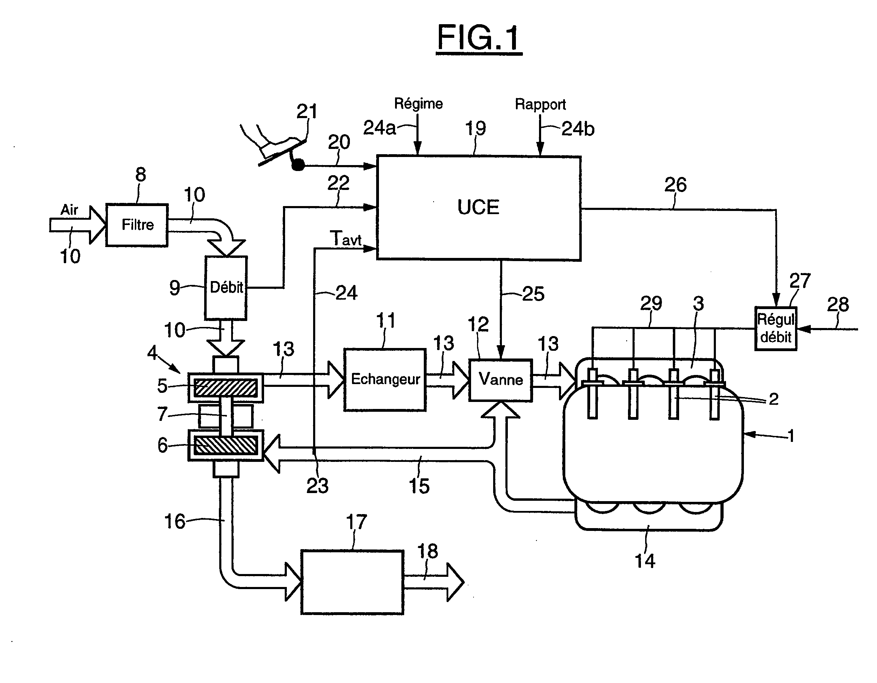

Sur la figure 1, se trouve représenté un moteur diesel 1 à quatre cylindres, chaque cylindre étant associé à un dispositif d'injection de carburant, référencé 2. L'air frais pénétrant dans le répartiteur d'admission 3 du moteur 1 traverse au préalable un turbocompresseur 4 comprenant un compresseur 5 et une turbine 6 montés sur un arbre commun 7. Les débits fournis par le compresseur 7 et la turbine 6 peuvent être modulés par un dispositif, non illustré sur la figure, qui peut comporter par exemple un moyen de modification de l'orientation d'ailettes internes du compresseur 5 et/ou de la turbine 6. L'air frais prélevé à l'extérieur traverse tout d'abord un filtre à air 8, puis un débitmètre 9, avant de pénétrer dans le compresseur 5. La circulation d'air à la pression atmosphérique est symbolisée sur la figure 1 par les flèches 10. L'air comprimé issu du compresseur 5 traverse, dans l'exemple illustré, un échangeur de chaleur 11 qui permet de refroidir les gaz admis. En sortie de l'échangeur 11, l'air comprimé refroidi traverse une vanne à trois voies 12 capable de réguler un débit de recirculation des gaz d'échappement avant de pénétrer dans le répartiteur d'admission 3. La circulation de l'air comprimé est symbolisée par les flèches 13 sur la figure 1.

Les gaz d'échappement issus du collecteur d'échappement 14, après combustion dans le moteur 1, sont dirigés en partie vers la vanne 12, afin d'être en partie recirculés après mélange dans l'air d'admission 13 dirigé vers le répartiteur d'admission 3. L'autre partie des gaz d'échappement, dont l'écoulement est symbolisé par la flèche 15, est amenée sur la turbine 6 afin d'entraîner le compresseur 5. A la sortie de la turbine 6, les gaz d'échappement, dont le flux est symbolisé par la flèche 16, traversent, dans l'exemple illustré, un filtre à particules 17 avant d'être rejetés dans l'atmosphère par le pot d'échappement 18.

Une unité de commande électronique (UCE) référencée 19, reçoit différents signaux permettant le fonctionnement du dispositif de régulation de l'invention. L'unité de commande électronique 19 reçoit en particulier par la connexion 20 un signal de position de la pédale d'accélérateur 21 actionnée par le conducteur. Le débit d'air frais, mesuré par le débitmètre 9, est amené sous la forme d'un signal par la connexion 22 à l'unité de commande électronique 19. Un capteur de température 23, placé dans l'écoulement des gaz d'échappement 15 en amont de la turbine 6, entre cette dernière et le collecteur d'échappement 14, permet la mesure de la température de ces gaz avant qu'ils pénètrent dans la turbine, que l'on appellera « température avant turbine » ou Tₐᵥₜ. Le signal correspondant à cette température est transmis à l'unité de commande électronique 19 par la connexion 24. L'unité de commande électronique reçoit encore, par les connexions 24a et 24b, des informations concernant le régime de rotation du moteur et le rapport de transmission engagé.

L'unité de commande électronique 19 émet différents signaux permettant la gestion du fonctionnement du moteur 1 ainsi que d'autres organes du véhicule, non représentés sur la figure. L'unité de commande électronique émet en particulier par la connexion 25, un signal de commande de pilotage de la vanne 12. L'unité de commande électronique émet également, par la connexion 26, un signal de commande pour un régulateur 27 du débit de carburant injecté dans le moteur 1 par les différents dispositifs d'injection 2. A cet effet, le carburant provenant du réservoir du véhicule est amené à l'organe de régulation 27 par la conduite 28 et le carburant est ensuite distribué par la conduite 29 aux différents injecteurs 2.

L'invention a pour objet une régulation du débit de carburant injecté dans le moteur 1 en fonction de la température Tₐᵥₜ mesurée, afin de corriger la dispersion entre les différents moteurs en sortie d'usine ainsi que l'impact de l'augmentation de la contre-pression à l'échappement lié au colmatage progressif du filtre à particules 17.

D'une manière générale, la valeur de consigne du débit de carburant injecté dans un type de moteur particulier, fait l'objet d'une cartographie en fonction du régime de rotation du moteur et de la position de la pédale d'accélérateur qui représente la demande du conducteur. Le résultat de cette cartographie peut être exprimé en couple moteur, puis converti en débit de carburant injecté. Une fois la valeur de consigne du débit de carburant ainsi déterminée, il est encore nécessaire de procéder à un calibrage pour satisfaire à un cahier des charges préétabli concernant la fiabilité du moteur. Pour chaque point de fonctionnement stabilisé, c'est alors la grandeur physique (température, pression, vitesse, etc.) la plus contraignante qui fixe la valeur du débit de carburant maximal admissible. Compte tenu de l'augmentation de la puissance spécifique des moteurs diesel actuels, la contrainte la plus sévère sur les points de pleine charge est généralement la température avant turbine Tₐᵥₜ. En effet, il est important de limiter cette température afin de protéger les soupapes d'échappement, le collecteur d'échappement, le carter de la turbine et la turbine elle-même.

Compte tenu des dispersions entre les différents moteurs en sortie de fabrication, il est nécessaire à l'heure actuelle de tenir compte d'une marge de sécurité d'environ 30°C sur la température avant turbine d'un moteur nominal théorique, afin qu'aucun moteur ne puisse, en fonctionnement, subir un dépassement de la température avant turbine maximale prédéterminée. Il est ainsi possible de maintenir la fiabilité des moteurs et de tenir compte des différentes contraintes thermomécaniques des moteurs et de leur turbine associée. La présence d'un filtre à particules dans la ligne d'échappement provoque également une augmentation progressive de la pression avant turbine, en fonction de l'accumulation progressive des suies dans le filtre. Cette augmentation de pression avant turbine génère une élévation de la température avant turbine, ces deux grandeurs étant étroitement liées entre elles. Il en résulte que le metteur au point doit régler la limitation de couple pour un niveau de température avant turbine maximale, c'est-à-dire tenant compte d'un colmatage maximal du filtre à particules.

Selon la présente invention, la température avant turbine maximale (Tₐᵥₜ) est régulée par une limitation du débit du carburant injecté.

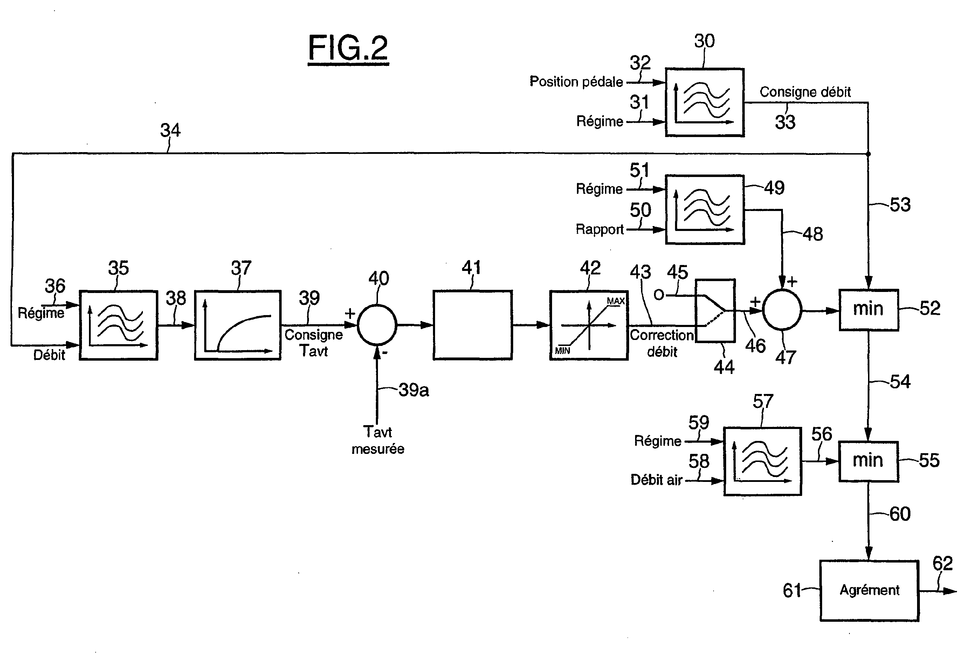

La figure 2 illustre une réalisation possible du dispositif de régulation de l'invention. L'ensemble des moyens illustrés sur la figure 2 est intégré dans l'unité de commande électronique 19 et le régulateur 27 illustrés sur la figure 1.

Le bloc 30 comprend une cartographie mémorisée d'une valeur de consigne du débit de carburant à injecter en fonction du régime de rotation du moteur et de la position de la pédale d'accélérateur du véhicule. Un signal correspondant au régime du moteur est amené par la connexion 31 à l'entrée du bloc 30 qui reçoit également par la connexion 32 un signal correspondant à la position de la pédale d'accélérateur. A la sortie du bloc 30, apparaît un signal sur la connexion 33 qui correspond à une valeur de consigne du débit de carburant à injecter, tel qu'il est demandé par le conducteur appuyant sur la pédale d'accélérateur 21 (figure 1). La consigne de débit de carburant est amenée par la connexion 34 sur l'une des entrées d'un bloc 35 qui comprend une cartographie mémorisée d'une valeur de consigne de la température avant turbine en fonction du débit de carburant injecté et du régime de rotation du moteur afin d'en déduire une valeur de consigne de la température avant turbine maximale (Tₐᵥₜ). Le signal correspondant au régime de rotation du moteur est amené sur le bloc 35 par la connexion 36. Un bloc-filtre 37 réalise, dans l'exemple illustré, un filtrage de premier ordre avec retard pur sur le signal de sortie du bloc 35 afin de prendre en compte l'inertie thermique du collecteur d'échappement 14. Le signal de sortie du bloc 35 apparaissant sur la connexion 38, qui est une valeur de consigne de la température avant turbine Tₐᵥₜ, apparaît en sortie du bloc 37 sur la connexion 39, après filtrage. Ce signal est amené sur l'entrée positive d'un sommateur 40 qui reçoit également sur son entrée négative, la valeur de la température avant turbine Tₐᵥₜ mesurée par le capteur 23 illustré sur la figure 1.

La température avant turbine est asservie par une boucle de régulation comprenant un régulateur 41 connecté à la sortie du sommateur 40 et couplé à un limiteur 42, à la sortie duquel apparaît, sur la connexion 43, un signal de correction du débit de carburant. Ce signal de correction est amené à l'une des entrées d'un dispositif d'inactivation 44 dont l'autre entrée 45 est à zéro. Selon la position pilotée du dispositif 44, le signal de sortie sur la connexion 46 peut donc être, soit le signal de correction de débit déterminé par le régulateur 41, soit la valeur zéro. La sortie 46 est amenée à un additionneur 47 qui reçoit également sur son autre entrée 48 un signal de limitation du couple moteur provenant d'un dispositif de limitation de couple 49. Le dispositif de limitation de couple 49 comporte une cartographie mémorisée couple moteur en fonction du régime de rotation du moteur et du rapport de transmission de la boîte de vitesses, qui transmet le couple moteur au dispositif d'entraînement et aux roues du véhicule. A cet effet, le dispositif de limitation de couple 49 reçoit sur l'une de ses entrées un signal correspondant au rapport de transmission engagé 50, et sur son autre entrée 51, un signal correspondant au régime de rotation du moteur.

A la sortie de l'additionneur 40 apparaît finalement, lorsque le dispositif d'inactivation 44 est en position d'activation, un signal correspondant à une valeur de consigne de débit de carburant avec limitation par la température avant turbine Tₐᵥₜ, régulée comme indiqué précédemment.

Il peut encore être nécessaire de tenir compte d'autres limitations possibles. C'est ainsi que, sur la figure 2, on a représenté un bloc de limitation 52 qui reçoit non seulement la valeur de consigne du débit de carburant ainsi limité par la température avant turbine, mais également la valeur de consigne du débit de carburant issu du bloc 30 par la connexion 53. Le bloc de limitation 52 valide la valeur minimale des deux valeurs qu'il reçoit à l'entrée et émet une valeur de consigne de débit de carburant sur sa sortie 54. Cette valeur alimente l'une des entrées d'un deuxième dispositif limiteur 55, qui reçoit sur son autre entrée 56 un signal provenant d'un dispositif de limitation des fumées 57, lequel contient une cartographie mémorisée en fonction du débit d'air frais alimentant le turbocompresseur et du régime de rotation du moteur. Le bloc de limitation 57 reçoit donc sur l'une de ses entrées 58 la valeur mesurée du débit d'air frais issue du débitmètre 9 (figure 1), et sur sa deuxième entrée 59, un signal correspondant au régime de rotation du moteur.

Le bloc 55 détermine la valeur minimale des signaux reçus sur ses deux entrées et émet sur sa sortie 60 un signal de consigne de débit de carburant, qui peut encore être modifié en fonction d'un calcul effectué dans le bloc 61 qui tient compte d'une stratégie prédéterminée d'agrément de conduite. Cette stratégie peut notamment réaliser un filtrage des variations brutales des signaux, de façon à supprimer les à-coups dans le fonctionnement. Le signal définitif de consigne de débit de carburant à injecter apparaît sur la sortie 62.

La température avant turbine Tₐᵥₜ se trouve ainsi régulée de manière précise par la variation du débit de carburant injecté.

Il convient de noter que l'objectif de l'invention étant de réguler la température avant turbine maximale, il est inutile de faire fonctionner le dispositif de régulation en permanence. Le signal de correction de débit apparaissant à la sortie du régulateur 41, n'est donc utilisé que pour les zones de fonctionnement du moteur dans lesquelles la température des gaz d'échappement à l'entrée de la turbine du turbocompresseur (Tₐᵥₜ) risque de dépasser une température maximale prédéterminée. Pour les zones de fonctionnement où cette température reste inférieure à ladite limite, le dispositif d'inactivation 44 est placé dans la position où le signal de correction du débit de carburant apparaissant sur la connexion 43 n'est pas pris en compte. La zone de fonctionnement où le dispositif 44 est actif peut être définie également par un seuil de régime moteur ou un seuil de débit du carburant injecté.

Grâce à la présente invention, la mise au point des moteurs en sortie de fabrication peut être faite sans prendre de marge de sécurité sur la courbe de pleine charge. La suppression de la marge habituelle de 30°C sur la température avant turbine maximale permet d'obtenir un gain en puissance de 3 kW environ.

De la même manière, l'invention permet, lors de la mise au point de moteurs en sortie d'usine, de régler les performances indépendamment de la charge de suies future du filtre à particules.

## Revendications

1. Dispositif de régulation du débit de carburant injecté dans un moteur diesel pour véhicule automobile, suralimenté par un turbocompresseur, comprenant un capteur (23) de la température des gaz d'échappement à l'entrée de la turbine (6) du turbocompresseur et un système d'asservissement de ladite température, et comprenant un régulateur (41) qui reçoit une valeur de consigne de température (39) fonction d'une commande (32) du conducteur du véhicule automobile et la valeur (39a) de température mesurée par le capteur, afin de fournir au moteur (1), une valeur corrigée (62) de débit de carburant injecté.

2. Dispositif de régulation selon la revendication 1, **caractérisé par le fait qu'**il comprend une cartographie mémorisée (35) du régime de rotation du moteur en fonction du débit de carburant injecté, pour la détermination de la valeur de consigne de température.

3. Dispositif de régulation selon l'une des revendications 1 ou 2, **caractérisé par le fait que** la valeur de consigne de température est le résultat d'une cartographie mémorisée (30) du régime de rotation du moteur en fonction de la position de la pédale d'accélérateur du véhicule.

4. Dispositif de régulation selon l'une quelconque des revendications précédentes, **caractérisé par le fait qu'**il comprend en outre un dispositif de limitation de couple moteur (49) à partir d'une cartographie mémorisée du régime de rotation du moteur en fonction du rapport de transmission du couple moteur, ce dispositif de limitation de couple moteur ajoutant une correction supplémentaire à la valeur corrigée de débit de carburant injecté.

5. Dispositif de régulation selon l'une quelconque des revendications précédentes, **caractérisé par le fait qu'**il comprend en outre un dispositif de limitation des fumées à l'échappement (57) à partir d'une cartographie mémorisée du régime de rotation du moteur en fonction du débit d'air frais alimentant le turbocompresseur, ce dispositif de limitation des fumées ajoutant une correction supplémentaire à la valeur corrigée de débit de carburant injecté.

6. Dispositif de régulation selon l'une quelconque des revendications précédentes, **caractérisé par le fait qu'**il comprend un moyen d'inactivation (44) du système d'asservissement pour les zones de fonctionnement du moteur dans lesquelles la température des gaz d'échappement à l'entrée de la turbine du turbocompresseur reste inférieure à une limite prédéterminée.

7. Dispositif de régulation selon l'une quelconque des revendications précédentes, **caractérisé par le fait que** le véhicule automobile comprend un filtre à particules (17) sur le trajet des gaz d'échappement.

8. Procédé de régulation du débit de carburant injecté dans un moteur diesel pour véhicule automobile, suralimenté par un turbocompresseur, selon lequel on mesure la température des gaz d'échappement à l'entrée de la turbine du turbocompresseur et on asservit la température des gaz d'échappement à l'entrée de la turbine du turbocompresseur en corrigeant le débit du carburant injecté dans le moteur en fonction de la température mesurée et d'une valeur de consigne de température qui est fonction d'une commande du conducteur du véhicule automobile.

9. Procédé de régulation selon la revendication 8, **caractérisé par le fait que** le véhicule automobile comprend un filtre à particules sur le trajet des gaz d'échappement.

## Claims

1. Device for regulating the delivery of fuel injected into a diesel engine for a motor vehicle, which is supercharged by a turbocharger comprising a temperature sensor (23) sensing the temperature of the exhaust gases on the inlet side of the turbocharger turbine (6) and a control system for the said temperature, and comprising a regulator (41) which receives a temperature setpoint value (39) dependant on a command (32) from the driver of the motor vehicle and the temperature value (39a) as measured by the sensor, in order to provide the engine (1) with a corrected value (62) of the injected fuel delivery.

2. Regulating device according to Claim 1, **characterized in that** it comprises a stored map (35) of the rotational speed of the engine as a function of the injected fuel delivery, in order to determine the temperature setpoint value.

3. Regulating device according to either of Claims 1 and 2, **characterized in that** the temperature setpoint value comes from a stored map (30) of the rotational speed of the engine as a function of the vehicle accelerator pedal.

4. Regulating device according to any one of the preceding claims, **characterized in that** it further comprises an engine torque limiting device (49) dependent on a stored map of the rotational speed of the engine as a function of the engine torque transmission ratio, this engine torque limiting device adding an additional correction to the corrected injected fuel delivery value.

5. Regulating device according to any one of the preceding claims, **characterized in that** it further comprises an exhaust smoke limiting device (57) dependent on a stored map of the rotational speed of the engine as a function of the fresh air flow rate supplying the turbocharger, this smoke limiting device adding an additional correction to the corrected injected fuel delivery value.

6. Regulating device according to any one of the preceding claims, **characterized in that** it comprises a means (44) for deactivating the control system for engine operating zones in which temperature of the exhaust gases on the inlet side of the turbocharger turbine remains below a preset limit.

7. Regulating device according to any one of the preceding claims, **characterized in that** the motor vehicle comprises a particulate filter (17) in the path of the exhaust gases.

8. Method of regulating the delivery of fuel injected into a diesel engine for a motor vehicle supercharged by a turbocharger, whereby the temperature of the exhaust gases on the inlet side of the turbocharger turbine is measured and the temperature of the exhaust gases on the inlet side of the turbocharger turbine is controlled by correcting the delivery of the fuel injected into the engine as a function of the measured temperature and of a temperature setpoint value which is dependent on a command from the driver of the motor vehicle.

9. Regulating method according to Claim 8, **characterized in that** the motor vehicle comprises a particulate filter in the path of the exhaust gases.

## Patentansprüche

1. Vorrichtung zur Regelung der in einen von einem Turbolader aufgeladenen Dieselmotor für ein Kraftfahrzeug eingespritzten Kraftstoffmenge, die einen Temperaturfühler (23) der Abgase am Eingang der Turbine (6) des Turboladers und ein Steuerungssystem der Temperatur und einen Regler (41) enthält, der einen von einem Befehl (32) des Fahrers des Kraftfahrzeugs abhängigen Temperatursollwert (39) und den vom Fühler gemessenen Temperaturwert (39a) empfängt, um dem Motor (1) einen korrigierten Wert (62) der eingespritzten Kraftstoffmenge zu liefern.

2. Regelvorrichtung nach Anspruch 1, **dadurch gekennzeichnet, dass** sie ein gespeichertes Kennfeld (35) der Drehzahl des Motors in Abhängigkeit von der eingespritzten Kraftstoffmenge für die Bestimmung des Temperatursollwerts enthält.

3. Regelvorrichtung nach einem der Ansprüche 1 oder 2, **dadurch gekennzeichnet, dass** der Temperatursollwert das Ergebnis eines gespeicherten Kennfelds (30) der Drehzahl des Motors in Abhängigkeit von der Stellung des Gaspedals des Fahrzeugs ist.

4. Regelvorrichtung nach einem der vorhergehenden Ansprüche, **dadurch gekennzeichnet, dass** sie außerdem eine Motordrehmoment-Begrenzungsvorrichtung (49) ausgehend von einem gespeicherten Kennfeld der Drehzahl des Motors in Abhängigkeit vom Übersetzungsverhältnis des Motordrehmoments enthält, wobei diese Motordrehmoment-Begrenzungsvorrichtung zum korrigierten Wert der eingespritzten Kraftstoffmenge eine zusätzliche Korrektur hinzufügt.

5. Regelvorrichtung nach einem der vorhergehenden Ansprüche, **dadurch gekennzeichnet, dass** sie außerdem eine Vorrichtung zur Begrenzung des Rauchs am Auspuff (57) ausgehend von einem gespeicherten Kennfeld der Drehzahl des Motors in Abhängigkeit von der den Turbolader speisenden Frischluftmenge enthält, wobei diese Ruchbegrenzungsvorrichtung zum korrigierten Wert der eingespritzten Kraftstoffmenge eine zusätzliche Korrektur hinzufügt.

6. Regelvorrichtung nach einem der vorhergehenden Ansprüche, **dadurch gekennzeichnet, dass** sie eine Einrichtung zur Deaktivierung (44) des Steuersystems für die Betriebszonen des Motors enthält, in denen die Temperatur der Abgase am Eingang der Turbine des Turboladers unter einer vorbestimmten Grenze bleibt.

7. Regelvorrichtung nach einem der vorhergehenden Ansprüche, **dadurch gekennzeichnet, dass** das Kraftfahrzeug ein Partikelfilter (17) auf der Strecke der Abgase enthält.

8. Verfahren zur Regelung der in einen von einem Turbolader aufgeladenen Dieselmotor für ein Kraftfahrzeug eingespritzten Kraftstoffmenge, gemäß dem die Temperatur der Abgase am Eingang der Turbine des Turboladers gemessen und die Temperatur der Abgase am Eingang der Turbine des Turboladers gesteuert wird, indem die Menge des in den Motor eingespritzten Kraftstoffs in Abhängigkeit von der gemessenen Temperatur und von einem Temperatursollwert korrigiert wird, der von einem Befehl des Fahrers des Kraftfahrzeugs abhängt.

9. Regelungsverfahren nach Anspruch 8, **dadurch gekennzeichnet, dass** das Kraftfahrzeug ein Partikelfilter auf der Strecke der Abgase enthält.
